# EUROPÄISCHE PATENTSCHRIFT

(11) **EP 4 636 351 B1**
(45) Veröffentlichungstag und Bekanntmachung des Hinweises auf die Patenterteilung: **07.10.2026**
(21) Anmeldenummer: 25168175.5
(22) Anmeldetag: 03.04.2025
(51) Int. Cl.: B29C 48/09, B29C 48/92, G01B 15/02, G01S 13/75, G01S 13/86, G01S 13/87, G01S 13/88, G01B 11/06, G01N 21/41, G01N 21/952

(54) **RADAR-MESSVERFAHREN UND RADAR-MESSVORRICHTUNG ZUM VERMESSEN EINES ROHRFÖRMIGEN MESSOBJEKTES**
RADAR MEASURING METHOD AND RADAR MEASURING DEVICE FOR MEASURING A TUBULAR MEASURING OBJECT
PROCÉDÉ DE MESURE RADAR ET DISPOSITIF DE MESURE RADAR POUR MESURER UN OBJET TUBULAIRE DE MESURE

(30) Priorität: 04.04.2024 DE 102024109459
(43) Veröffentlichungstag der Anmeldung: 22.10.2025
(73) Patentinhaber: CiTEX Holding GmbH, 49324 Melle (DE)
(72) Erfinder: Neumeister, Arno, 32457 Porta Westfalica (DE)
(74) Vertreter: Bremer, Ulrich

(56) Entgegenhaltungen:
- DE-A1- 102017 125 753
- DE-A1- 102020 124 263
- DE-B3- 102020 123 992
- DE-B3- 102022 105 479

## Beschreibung

Die Erfindung betrifft ein Radar-Messverfahren und eine Radar-Messvorrichtung zum Vermessen eines rohrförmigen Messobjektes, insbesondere nach der Extrusion des rohrförmigen Messobjektes.

Rohre aus Kunststoff oder Gummi werden nach ihrer Extrusion im Allgemeinen vermessen, um ihre geometrischen Eigenschaften, d. h. insbesondere Außendurchmesser, Innendurchmesser und Wandstärken zu überprüfen. Bei Radar-Messverfahren bzw. THz-Messverfahren wird im Allgemeinen ein Rohr durch einen Messraum geführt, wobei ein Radar-Transceiver einen Radar-Sendestrahl senkrecht durch den Mittelpunkt des Rohres ausgibt, so dass Teilreflexionen des Radar-Sendestrahls an dessen Außenfläche und Innenfläche erfolgen, und die so reflektierten Radar-Strahlen mit ihren Laufzeiten detektiert werden können. Somit kann bei bekanntem Brechungsindex des Materials aus einer Radar-Messung durch den Mittelpunkt des Rohres direkt eine Ermittlung der relevanten geometrischen Eigenschaften des Außendurchmessers, Innendurchmessers und der Wanddicken erfolgen.

Im Allgemeinen ist der Brechungsindex des Materials zunächst unbekannt, da er von seiner genauen Zusammensetzung und z. B. auch der Temperatur abhängen kann. Da die Lichtgeschwindigkeit der Radar-Strahlung im Rohr durch den Brechungsindex bestimmt ist, können somit die geometrischen Eigenschaften bei unbekanntem Brechungsindex zunächst nicht eindeutig festgelegt werden.

Die WO 2016/139155 A1 beschreibt ein Messverfahren, bei dem zunächst eine Leermessung ohne Messobjekt erfolgt, bei dem ein Terahertz-Transceiver Strahlung durch den leeren Messraum zu einem Reflektor und zurück zu dem THz-Transceiver vornimmt. Bei der nachfolgenden Vermessung des Messobjektes wird eine Gesamt-Laufzeitverzögerung des Totalreflexions-Peaks gegenüber der Leermessung ermittelt, zusammen mit den Laufzeiten der Teilreflexions-Peaks an den Grenzflächen des Rohres. Aus diesen Messungen werden nachfolgend Brechungsindex und Wanddicken bzw. geometrische Eigenschaften ermittelt.

Oftmals sind jedoch gerade die Innenflächen durch z. B. Sagging, bei dem weiches Rohrmaterial an der Innenfläche herunterfließt, etwas deformiert, so dass keine genaue Teilreflexion entlang der optischen Achse zurück zu dem THz-Transceiver erfolgt, wobei dieses Messverfahren bereits bei Fehlen eines Teilreflexions-Peaks nicht durchführbar ist. Weiterhin erfordert das Verfahren der WO 2016/139155 A1 eine spezielle Spiegelanordnung und Fokussierung der THz-Strahlung, wobei bei außermittigen Positionen des Rohres entsprechend Fehler auftreten können. Zudem kann die Schwächung des Radar-Messsignals bei der Vermessung erheblich sein, wobei insbesondere eine Absorption der Radar-Strahlen in dem Material des Rohres erfolgen kann, und z. B. leichte Fehlstellungen der Flächen weiterhin einen Teil der Teilreflexionen ungünstig wegreflektieren, so dass in der Messung zum Teil lediglich der Totalreflexions-Peak des Radar-Sendestrahls am Reflektor ermittelt werden kann, hingegen nicht mehr sämtliche Teil-Reflexionspeaks genau ermittelt werden können.

Die DE 10 2016 105 599 A1 beschreibt eine Terahertz-Messvorrichtung zum Vermessen eines Prüfobjektes, insbesondere eines Rohres, wobei die Terahertz-Messvorrichtung eine THz-Sende- und Empfangseinheit zum Aussenden von THz-Strahlung in einem Abstrahl-Raumwinkel entlang einer optischen Achse, Empfangen reflektierter THz-Strahlung und Erzeugen einer Signalamplitude als Funktion der Zeit oder Frequenz, sowie eine Steuer- und Auswerteeinrichtung zur Aufnahme und Auswertung der Signalamplitude aufweist, wobei die Steuer- und Auswerteeinrichtung aus der Signalamplitude Fehlstellen des Prüfobjektes ermittelt, insbesondere aufgrund reflektierter Terahertz-Strahlung, die nicht senkrecht an ordnungsgemäßen Grenzflächen des Prüfobjektes reflektiert wurde. Hierbei ist insbesondere eine in der optischen Achse positionierte Blende zum Ausblenden eines Kern-Bereichs des Abstrahl-Raumwinkels um die optische Achse herum vorgesehen.

Die DE 197 57 067 A1 beschreibt ein Verfahren zur Messung des Durchmessers eines Stranges, insbesondere eines Kabels kleineren Durchmessers, bei dem der Strang ohne Zwischenschaltung einer abbildenden Optik mit dem Licht mindestens einer monochromatischen, in der Messebene punktförmigen Lichtquelle beleuchtet wird, wobei die Hauptstrahlrichtung annähernd senkrecht auf der Längsachse des Stranges steht, und Licht ohne Zwischenschaltung abbildender optischer Elemente auf einem ein- oder mehrzeiligen lichtempfindlichen Sensor auf der gegenüberliegenden Seite des Stranges empfangen wird, wobei die Achse des Sensors auf der Hauptstrahlrichtung annähernd senkrecht steht. Hieraus wird ein dem Strangdurchmesser entsprechender Wert durch Auswertung der Intensitätsverläufe in den Beugungsräumen an den Rändern des vom Strang verursachten Schattens bestimmt.

Die DE 10 2017 125 753 A1 zeigt eine THz-Messvorrichtung zum Messen mindestens einer Wanddicke eines rohrförmigen, eine Innenfläche und eine Außenfläche aufweisenden Messobjektes. Hierbei ist ein THz-Haupt-Sensor zum Aussenden eines THz-Hauptstrahls entlang einer ersten optischen Achse durch eine Symmetrieachse des Messobjektes und zum Empfang von an der Außenfläche und der Innenfläche entlang der ersten optischen Achse reflektierter THz-Strahlung vorgesehen. Weiterhin ist ein THz-Zusatz-Sensor zum Aussenden eines THz-Zusatz-Strahls entlang einer zweiten optischen Achse vorgesehen, die gegenüber der ersten optischen Achse verstellt ist und zumindest zeitweise nicht durch die Symmetrieachse verläuft. Aus den Messsignalen können insbesondere innere Wanddicken-Verformungen detektiert werden.

Die DE 10 2020 123 992 B3 zeigt eine THz-Messvorrichtung und ein THz-Messverfahren zur Vermessung von Prüfobjekten, insbesondere Rohren. Hierbei ist ein erster THz-Transceiver vorgesehen, der einen ersten THz-Strahl mit einer ersten Polarisationsebene entlang einer optischen Achse durch eine Messung ausgibt, und ein erster Polarisations-Spiegel zum Reflektieren des durch den Messraum gelangten ersten THz-Strahls entlang der optischen Achse zurück zu dem ersten THz-Transceiver. Weiterhin ist ein zweiter THz-Transceiver vorgesehen, der einen zweiten THz-Strahl mit einer von der ersten Polarisationsebene verschiedenen, insbesondere orthogonalen zweiten Polarisationsebene zu einem zweiten Polarisations-Spiegel ausgibt. Die Messsignale der beiden THz-Transceiver können nachfolgend zueinander in Beziehung gesetzt werden, um Schichtdicken und/oder einen Brechungsindex des Prüfobjektes zu ermitteln.

DE 10 2020 124 263 A1 beschreibt ein Verfahren zum Bestimmen mindestens eines Geometrieparameters eines noch nicht vollständig verfestigten, noch fließfähige Anteile aufweisenden strang- oder plattenförmigen Gegenstands, mit einem Ermittlungsschritt zur Ermittlung eines Zusammenhangs zwischen dem Brechungsindex des Gegenstands und einer im Zuge seiner vollständigen Verfestigung erfolgenden Schrumpfung, und mit einem Bestimmungsschritt, in dem der Brechungsindex und der Geometrieparameter des noch nicht verfestigten Gegenstandes bestimmt werden, woraufhin aus den im Bestimmungsschritt bestimmten Werten und dem ermittelten Zusammenhang der mindestens eine Geometrieparameter im vollständig verfestigten Zustand berechnet wird.

Aus der DE 10 2022 105 479 B3 ist ein Verfahren zum Bestimmen von Dimensionsdaten, insbesondere Dickendaten, eines plattenförmigen oder strangförmigen Objekts, insbesondere eines Rohres bekannt, bei dem von einem ersten Sender Terahertzstrahlung zu mindestens einem Zeitpunkt auf mindestens einen Ort auf der Oberfläche des Objektes ausgesendet und nach mindestens einmaligen Durchstrahlen des Objekts gelangte Terahertzstrahlung empfangen wird, wobei von einem zweiten Sender Terahertzstrahlung mit einer Bandbreite von weniger als 5 % der Trägerfrequenz der Terahertzstrahlung zu mehreren Zeitpunkten auf die Oberfläche des Objekts ausgesendet wird. Aus den Messsignalen der beiden Sender wird nachfolgend eine Dimension des Objekts ermittelt.

Der Erfindung liegt somit die Aufgabe zugrunde, ein Radar- Messverfahren und eine Radar-Messvorrichtung zum Vermessen eines rohrförmigen Messobjektes zu schaffen, die eine sichere Vermessung des Messobjektes ermöglichen.

Diese Aufgabe wird durch ein Radar-Messverfahren und eine Radar-Messvorrichtung gemäß den unabhängigen Ansprüchen gelöst. Die Unteransprüche beschreiben bevorzugte Weiterbildungen.
Das erfindungsgemäße Radar-Messverfahren kann insbesondere durch eine erfindungsgemäße Radar-Messvorrichtung durchgeführt werden.

Der Erfindung liegt der Gedanke zugrunde, den Radar-Transceiver bei der Vermessung in einer definierten Weise zu verstellen, insbesondere in einer vertikalen Richtung orthogonal zu seiner optischen Achse, und in den vertikalen Positionen jeweils Messungen durchzuführen, bei denen der Radar-Sendestrahl ausgegeben und der reflektierte Radar-Strahl detektiert wird. Durch die vertikale Verstellung des Radar-Transceivers kann fortwährend eine Leermessung durchgeführt werden, indem der Radar-Transceiver bis zu Positionen oberhalb oder unterhalb des Messobjektes geführt wird. Hierbei wurde erfindungsgemäß ermittelt, dass bei der Verstellung des Radar-Transceivers entlang des Messobjektes in einigen Positionen, insbesondere in jeweils einer Position zwischen der mittleren und einer oberen Position, ein Totalreflexions-Peak ohne ergänzende Teilreflexions-Peaks an den Grenzflächen des Messobjektes ermittelt wird. Erfindungsgemäß wird erkannt, dass aus der Laufzeitverzögerung und der ermittelten Messposition nachfolgend der Brechungsindex des rohrförmigen Messobjektes bzw. Rohres ermittelt werden kann.

Somit ist erfindungsgemäß vorteilhafterweise eine Ermittlung des Brechungsindex ohne die Ermittlung von Teilreflexions-Peaks an Grenzflächen möglich, indem bei der Vermessung eine spezielle Strahlengeometrie erkannt wird, die bereits mit den Messsignalen und gemessenen Werten direkt ausgewertet werden kann. Da bei der Messung keine Teilreflexions-Peaks auftreten, kann das starke Signal des Totalreflexions-Peaks sicher detektiert werden, und auch Deformationen der Innenfläche führen nicht zu einer Schwächung des Ergebnisses. Hierbei zeigt sich, dass insbesondere die Außenkontur des Messobjektes im Allgemeinen bei der Extrusion hinreichend sicher festgelegt wird und an den Außenflächen, die schneller abkühlen als die Innenflächen, auch keine Verformung wie Sagging usw. auftreten.

Erfindungsgemäß wird vorteilhafterweise ausgenutzt, dass der Brechungsindex des Rohres sich in der Strahlengeometrie in zwei Eigenschaften auswirkt:
- Zum einen erfolgt eine optische Brechung des Radar-Messstrahls beim Eintritt in die Außenfläche des Rohres, und nachfolgend entsprechend beim Austritt aus dem Rohr in den hinteren Bereich zum Reflektor, wobei der Eintrittswinkel und der Austrittswinkel beider Brechungen an den Grenzflächen gemäß dem Brechungsgesetz direkt vom Brechungsindex abhängen.
- Zum anderen ist die Laufzeit des Radar-Sendestrahls zwischen dem Eintrittspunkt in das Rohr und dem Austrittspunkt aus dem Rohr von der Lichtgeschwindigkeit in dem Material und somit wiederum direkt von dem Brechungsindex abhängig, so dass die Laufzeitverzögerung des Radar-Sendestrahls durch das Rohr bei einem festen geometrischen Strahlenverlauf dieser Wegstrecke zugeordnet werden kann.

Erfindungsgemäß wird vorteilhafterweise eine definierte geometrische Struktur erreicht, indem bei Empfangen eines reflektierten Radar-Strahls bereits festgelegt ist, dass der Radar-Sendestrahl, der durch das Rohr getreten und an seinem hinteren Bereich wiederum austritt, dort senkrecht auf den Reflektor fällt, da ansonsten kein reflektierter Radar-Strahl empfangen werden kann. Somit kann bei Detektion eines reflektierten Radar-Strahls mit Teilreflexions-Peak die entsprechende geometrische Struktur angesetzt werden, bei der somit einige Größen bereits bekannt sind, da zum einen die Laufzeitverzögerung gegenüber der Leermessung und weiterhin die vertikale Position des Radar-Transceivers direkt gemessen werden können. Weiterhin kann z. B. der Außenradius des Rohres direkt ermittelt werden; oftmals ist der Außenradius des Rohres z. B. bereits durch vorab durchgeführte mechanische Messungen bekannt; weiterhin kann der Außenradius auch z.B. durch einen Laser, eine andere optische Einrichtung und/oder z.B. Ultraschall ermittelt werden; weiterhin kann der Außenradius jedoch auch aus den Messungen selbst ermittelt werden, da der Radar-Transceiver in seiner Verstellrichtung über das Rohr hinweg geführt wird und somit die Position des Außenumfangs direkt als Abschattung des Radar-Sendestrahls ermittelt werden kann.

Somit kann insbesondere bei der vertikalen Verstellung
- der Eintritt des Radar-Sendestrahls in das Rohr detektiert werden,
- bei nachfolgender Verstellung des Radar-Transceivers zur Mitte hin nachfolgend die Radar-Messposition unter Ermittlung des verzögerten Totalreflexions-Peaks festgestellt werden, und
- nachfolgend eine weitere Verstellung zur Mitte hin erfolgen, wobei die mittlere Position durch den Mittelpunkt des Rohres direkt als Messung des Totalreflexions-Peaks, insbesondere mit den Teilreflexions-Peaks, detektiert werden, wobei die mittlere Position kann auch erkannt werden, wenn z.B. eine Innenfläche nicht genau zurückreflektiert, und
- bei weiterer vertikaler Verstellung, z. B. weiter nach unten hin, wiederum das Erreichen des Außenradius festgestellt wird.

Hierbei sind Messungen insbesondere in speziellen Positionen vorgesehen.

In einer ersten hervorgehobenen Position tritt der Radar-Sendestrahl durch die Wandung des Messobjektes, ohne an einer Innenfläche reflektiert zu werden, weiter zu einem Austrittspunkt, der von den Eintrittspunkt verschieden ist, gelangt, von wo der Radar-Sendestrahl dann senkrecht auf den Reflektor trifft und zurückreflektiert wird.

Gemäß einer weiteren, alternativen oder insbesondere auch zusätzlichen, insbesondere nachfolgenden Messung, tritt der Radar-Sendestrahl durch die Wandung des Messobjektes, wird nachfolgend an einer Innenfläche reflektiert, und gelangt weiter zu einem Austrittspunkt, der von den Eintrittspunkt verschieden ist, gelangt, von wo der Radar-Sendestrahl senkrecht auf den Reflektor trifft und zurückreflektiert wird. Hierbei kann sich insbesondere eine symmetrische optische Ausbildung um den Reflektionspunkt an der Innenfläche ergeben.

Gemäß einer weiteren bevorzugten Ausbildung erfolgt ein Verschwenken des Radar-Sendestrahls, insbesondere durch Schwenken des Radar-Transceivers. Vorzugsweise wird ein gegenüber liegender Reflektor mit geschwenkt. Hier kann wiederum eine gleiche oder entsprechende Geometrie wie bei der translatorischen Verstellung angesetzt werden. Ergänzend können auch Teilreflektionen an Grenzflächen wie der Außenfläche und/oder Innenfläche gemessen werden.

Erfindungsgemäß kann vorteilhaftweise auch z. B. bei Fehlen eines Innen-Reflexionspeaks an einer Innenfläche nachfolgend eine Vermessung erfolgen, da bei bekanntem Brechungsindex anhand der Leermessung und der Transmissionsmessung auch bei Fehlen der Reflexion an einer Grenzfläche die Position der Wandfläche und die entsprechenden Schichtdicken abgeschätzt werden können, insbesondere gemäß dem Verfahren der DE 10 2020 120 547 A1. Somit ermöglicht die Brechungsindex-Bestimmung ohne Heranziehung von Teilreflexions-Peaks nachfolgend auch Ermittlungen von Wanddicken mit Grenzflächen, die keinen Teilreflexions-Peak liefern.

Die erfindungsgemäße Messvorrichtung und das erfindungsgemäße Messverfahren ermöglichen weiterhin auch eine Vermessung ohne einen Kreuztisch oder eine ähnliche Einrichtung, die die Position der Radar-Messvorrichtung aufwändig anpasst, da durch die fortlaufenden Vertikalverstellung des Radar-Transceivers immer der relevante Messbereich erfasst wird und jeweils die Position des Rohres detektiert wird, auch bei einer Verstellung des Rohres. So kann sich das warme Rohr z. B. von der Geometrieachse der Messvorrichtung entfernen, wobei erfindungsgemäß dennoch weiterhin Vermessungen ermöglicht werden, da die Vertikalführung des Transceivers das Rohr und angrenzende freie Bereiche jeweils aktuell erfasst.

Bei der Ermittlung des Brechungsindex kann insbesondere eine Berechnung aufgrund der vorliegenden Formen erfolgen, z. B. mit nachfolgender Potenzreihen-Annäherung der so gebildeten Formeln.

Die Erfindung wird im Folgenden anhand der beiliegenden Zeichnungen an einigen Ausführungsformen näher erläutert. Es zeigen:
- Fig. 1: eine Messanordnung zur Vermessung eines Rohres mit mehreren Messpositionen und Messsignalen gemäß einer Ausführungsform;
- Fig. 2: eine der Figur 1 entsprechende Darstellung unter Angabe geometrischer Größen in dem Strahlengang;
- Fig. 3: mehrere Strahlengänge bei vertikaler Verstellung des Radar-Transceivers;
- Fig. 4: Messdiagramme in mehreren vertikalen Positionen;
- Fig. 5: eine Messung bei fehlendem Teilreflexionspeak;
- Fig. 6: eine Messanordnung zur Vermessung eines Rohres in einer Messpositionen gemäß weiteren Ausführungsform;
- Fig. 7: eine Vergrößerung der Anordnung von Fig.6
- Fig. 8: eine Messanordnung zur Vermessung eines Rohres gemäß einer weiteren Ausführungsform unter Schwenken des Radar-Transceivers.

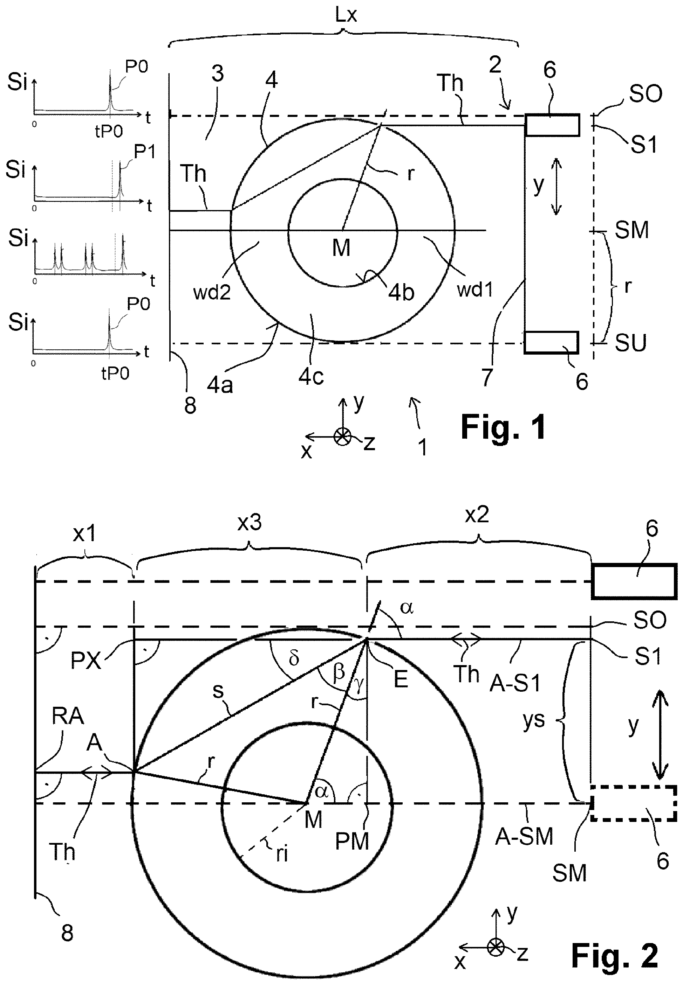

Figur 1 zeigt eine Radar-Messanordnung 1, die eine Radar-Messvorrichtung 2 mit einem Messraum 3 sowie ein in dem Messraum 3 aufgenommenes Messobjekt 4 umfasst. Das Messobjekt 4 ist als Rohr ausgebildet, das vorzugsweise entlang seiner Symmetrieachse in z-Richtung durch den Messraum 3 gezogen und fortlaufend vermessen wird. Die Radar-Messvorrichtung 2 weist hierzu einen Radar-Transceiver 6 auf, der an einer Führungseinrichtung 7 in einer Vertikalrichtung y verstellt wird, und im Messraum 3 gegenüberliegend einen Reflektor 8. Der Reflektor 8 kann sich durchgängig über die gesamte Höhe y des Messraums 3 erstrecken, oder zusammen mit dem gegenüberliegenden Radar-Transceiver 6 in vertikaler Richtung y verstellt werden. Der Radar-Transceiver 6 gibt einen Radar-Sendestrahl Th entlang seiner optischen Achse A6 aus, der in dieser Ausführungsform in x-Richtung, d.h. senkrecht zur vertikalen Richtung y und senkrecht zu der Objekt-Verstellrichtung z bzw. Transportrichtung z des Rohres 4 verläuft. Somit wird eine Messebene als xy-Ebene aufgespannt, die der Zeichenebene der Figuren 1 und 2 entspricht, wobei das Rohr 4 vorzugsweise in der Objekt-Verstellrichtung z senkrecht durch die XY-Ebene verstellt und fortlaufend vermessen wird, insbesondere nach seiner Extrusion.

Das Rohr 4 weist einen ringförmigen Querschnitt auf, mit einer zylindrischen Außenfläche 4a, einer zylindrischen Innenfläche 4b und einer zwischen Innenfläche 4b und Außenfläche 4a ausgebildeten Wandung 4c, die aus einem Kunststoff-Material mit einem Brechungsindex n gebildet ist, wobei der Brechungsindex n z. B. im Bereich von 1,3 bis 1,7 liegen kann. Bei der Vermessung soll insbesondere eine Ermittlung sowohl seiner geometrischen Eigenschaften, d. h. insbesondere seines Außenradius r, d. h. dem Abstand der Außenfläche 4a zu seinem Mittelpunkt M, sowie sein Innenradius ri, und weiterhin des Brechungsindex n erfolgen.

Die Vermessung erfolgt unter Verstellung des Radar-Transceivers 6 in vertikaler Richtung y unter Messung einer Laufzeit des Radar-Sendestrahls Th von dem Transceiver 6 zu dem Reflektor 8 und zurück zu dem Radar-Transceiver 6. Die Laufzeitmessung kann insbesondere durch Frequenzmodulation, z. B. als FMCW (frequency modulated continous wave) - Radar, oder auch durch gepulste Radar-Strahlung, vorzugsweise in einem Frequenzbereich von 10 GHz bis 10 THz erfolgen.

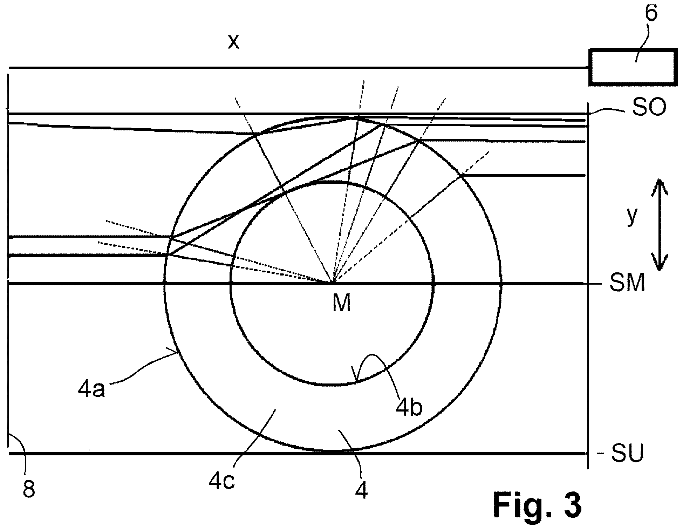

Bei der Vermessung wird der Radar-Transceiver 6 in der Führungseinrichtung 7 in vertikaler y-Richtung verstellt, wodurch sich unterschiedliche Strahlengänge ergeben, wie insbesondere aus Fig. 3 ersichtlich ist, die beispielhaft einige vertikale Positionen und die zugehörigen Strahlenverläufe zeigt. In Fig. 1 sind an der rechten Seite an in der vertikalen gestrichelten Linie folgende relevante vertikale Punkte bzw. Höhenpunkte für den Radar-Transceiver 6 eingezeichnet:
- ein oberer Punkt SO und ein unterer Punkt SU, in denen der Radar-Sendestrahl Th gerade an die Außenfläche 4a gelangt, so dass diese Punkte SO und SU einen vertikalen Abstand von 2 * r zueinander haben,
- weiterhin ein mittlerer Punkt SM zwischen den Punkten SO und SU, in dem somit der Radar-Sendestrahl Th entlang der optischen Achse A-SM durch den Mittelpunkt M gelangt; die Punkte SO und SU haben somit von SM jeweils den vertikalen Abstand, der dem Außenradius r entspricht
- sowie eine aktuelle Sende-Position S1, die der Transceiver 6 in dieser Konstellation einnimmt, mit der optischen Achse A-S1.

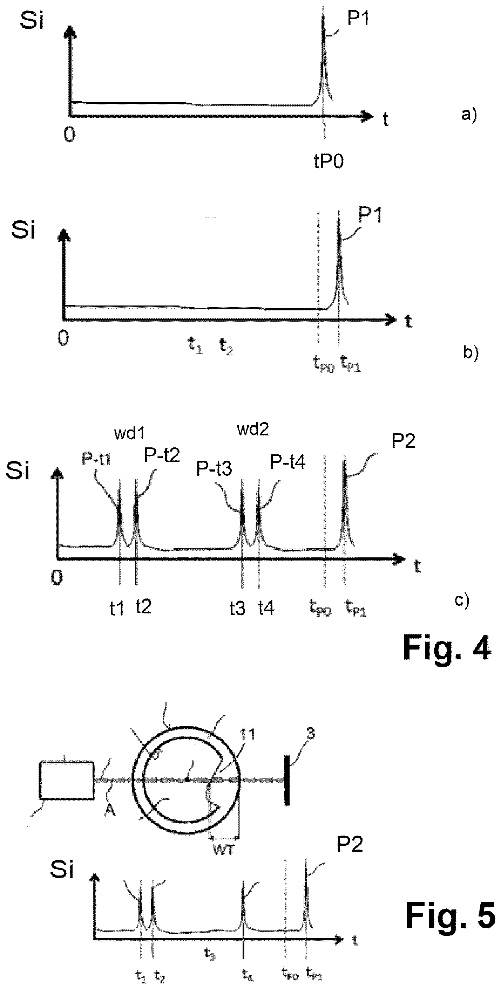

Bei der y-Verstellung gelangt der Transceiver 6 oberhalb des oberen Punktes SO und/oder unterhalb des unteren Punktes SU und sendet den Radar-Sendestrahl Th somit durch den leeren Messraum 3 zu dem Reflektor 8, der den Radar-Sendestrahl Th senkrecht zu dem Transceiver 6 zurückreflektiert, so dass gemäß dem Messdiagramm a) der Fig. 4 eine Leermessung des Messraums 3 erfolgt, bei dem zu einem Zeitpunkt tP0 der reflektierte Radarstrahl Th detektiert wird, der somit einen Abstand LX in Längsrichtung x zwischen dem Radar-Transceiver 6 und dem Reflektor 8 zweimal durchquert hat, mit der Lichtgeschwindigkeit c0 in Luft. Somit wird hier eine Laufzeit des Peaks P0 von tp0 = (2*Lx) /c0 gemessen. Fig. 2 zeigt eine derartige Messposition oberhalb des Punktes SO.

Nachfolgend wird der Transceiver 6 nach unten verstellt und gelangt somit im oberen Punkt SO zunächst gegen die Außenfläche 4a des Rohres 4, und tritt nachfolgend bei weiterer Abwärts-Verstellung durch die Außenfläche 4a in die ringförmige Wandung 4c des Rohres 4, wobei der Radar-Strahl Th hierbei entsprechend dem Snellius-schen Brechungsgesetz gebrochen wird. Der Radar-Sendestrahl Th durchquert somit die Wandung 4c und tritt in einer anderen y-Position wieder aus der Außenfläche 4a aus. Fig. 3 zeigt eine Verstellung in y-Richtung mit mehreren vertikalen y-Positionen und den entsprechenden Strahlenverläufen. Der Radar-Sendestrahl Th wird in der oberen Hälfte, d.h. oberhalb von SM, gemäß dem Brechungsgesetz an der Außenfläche 4a nach innen zum Mittelpunkt M hin gebrochen, wobei er in weiter oben gelegenen y-Positionen des Transceivers 6 nicht gegen die Innenfläche 4b gelangt und an der abgewandten Seite, d.h. zum Reflektor 8 hin, beim Austritt aus der Außenfläche 4a wieder nach oben gebrochen wird. In den Positionen, in denen der Radar-Sendestrahl Th nachfolgend unter einem rechten Winkel von 90° gegen den Reflektor 8 gelangt, wird er wieder zurück reflektiert und gelangt im gleichen Strahlengang zurück zum Transceiver 6, so dass seine Laufzeit detektiert wird. In anderen Positionen, in denen der Radar-Sendestrahl Th nachfolgend nicht genau unter einem rechten Winkel von 90° gegen den Reflektor 8 gelangt, gelangt er in einen anderen Strahlengang und im Allgemeinen nicht mehr zum Transceiver 6, siehe die Strahlenverläufe der Fig. 3.

Wie aus Figur 3 zu entnehmen ist, ergeben sich an der - in der Messebene - kreisförmigen Außenfläche 4a je nach Y-Position unterschiedliche Strahlenverläufe in der Wandung 4c und wiederum außerhalb zwischen dem Rohr 4 und dem Reflektor 8. Eine senkrechte Spiegelung am Reflektor 8, die eine Messung ermöglicht, ist im Allgemeinen in der mittigen Position SM möglich und liefert das Mess-Diagramm der Fig. 4 c), wobei der Radar-Sendestrahl Th in der optischen Achse A-SM jeweils senkrecht durch die Außenfläche 4a, zweimal die Innenfläche 4b und wiederum die Außenfläche 4a tritt, wobei jeweils Teil-Reflexionspeaks gemäß Fig. 4c) in den Zeitpunkten t1, t2, t3, und t4 erfolgen, dann unter Ausbildung eines Total-Reflexionspeaks P2 senkrecht am Reflektor 8 reflektiert wird und zurück gelangt.

Weiterhin sind jedoch auch Messungen an besonderen Positionen S1 und S2 möglich, die nachfolgend in Fig. 1, 2 sowie Fig. 6, 7 beschrieben werden.

Gemäß Fig. 1 und 2 erfolgt eine Messung in der Position S1, die einen Abstand von ys von dem mittleren Punkt SM hat, und entsprechend symmetrisch hierzu auch im gleichen Abstand ys unterhalb von SM. Nach Durchqueren der Wandung 4c des Rohres 4 erfolgt eine senkrechte Reflexion am Reflektor 8, so dass der reflektierte Radar-Sendestrahl Th wiederum vom Transceiver 6 detektiert werden kann.

In der Position S1 erfolgt erfindungsgemäß eine Berechnung des geometrischen Strahlenverlaufs unter Ermittlung der relevanten Größen des Rohres 4.

Zunächst ist der Außenradius r des Rohres 4 bekannt; hierzu kann grundsätzlich vorab eine mechanische Vermessung des Rohres 4 erfolgen, weiterhin erfolgt auch eine Vermessung durch die Verstellung des Radar-Transceivers 6 in vertikaler Richtung y, so dass der Abstand zwischen den Punkten SO und SM als r gemessen wird und/oder der Durchmesser, d.h. der doppelte Außenradius 2 * r, entsprechend zwischen den Punkten SO und SU. Die Messposition SM kann durch das typische im Fig. 4 c) gezeigte Messdiagramm einem Totalreflexions-Peak P2 und vier Teilreflexions-Peaks P2, P3, P4 und P5 an der Außenfläche 4a und Innenfläche 4b ermittelt werden, wobei hierzu zunächst die genauen Laufzeiten nicht relevant sind. Insbesondere kann auch eine Mittelung über die Messungen zwischen diesen Punkten SO, SU, SM erfolgen, sowie eine fortlaufende Korrektur dieser Werte beim reversierenden Messen.

Bei der vertikalen Verstellung des Radar-Transceivers 6 von SO nach unten gelangt der Radar-Sendestrahl Th dann gegen die Außenfläche 4a und wird von da an nach innen in die Wandung 4c gebrochen, so dass der Totalreflexions-Peak P0 aus dem Messsignal verschwindet, solange keine senkrechte Reflexion am Reflektor 8 erfolgt. In der Position S1 wird dann das in Fig. 4b gezeigte Diagramm mit einem einzigen Totalreflexionspeak P1 zum Zeitpunkt tp1 gemessen, so dass diese Messung auch z.B. von der Messung in SM unterschieden werden kann. Die Laufzeit tp1 unterscheidet sich von der Laufzeit tP0 der Leermessung durch die von der Leermessung unterschiedliche Laufzeit im Material des Rohres 4. Weiterhin unterscheidet sich die Laufzeit von tP1 der Fig. 4b von der Laufzeit von tP2 der Fig. 4c.

Die Figur 2 zeigt den Strahlengang in der vertikalen Position des Aussende-Punktes S1 detaillierter: der Radar-Sendestrahl Th gelangt vom Aussende-Punkt S1 entlang der optischen Achse A-S1 in einer Wegstrecke x2 zu dem Eintrittspunkt E an der Außenfläche 4a des Rohres 4, wird von da nach innen zum Mittelpunkt M hin gebrochen und verläuft als Sehne s zum Austrittspunkt A, und von dort zum Reflexionspunkt RA, an dem er senkrecht zurückreflektiert wird und diese Wegstrecke erneut durchquert bis zum Aussende-Punkt S1. In der Darstellung der Figur 2 ist der Abstand Lx zwischen dem Sendepunkt S1 und dem Reflektor 8 unterteilt in drei Streckenbereiche x1, x2, und x3, nämlich:
- den Streckenbereich x2 vom Aussende-Punkt S zum Eintrittspunkt E,
- nachfolgend den Streckenbereich x3, der sich als Projektion der Sehne s auf die in x-Richtung verlaufende optische Achse A-S1 des Transceivers 6 ergibt. Hierbei ist in Fig. 2 der Punkt PX als Projektion des Austrittspunktes A auf die optische Achse A-S1 gezeigt, sodass x3 der Abstand von E - PX ist,
- dem hinteren Streckenbereich x1, dessen Länge somit der Strecke A - RA entspricht, mit dem Reflexions-Punkt RA an dem Reflektor 8.

Somit gilt Lx = x1 + x2 + x3. Der Strahlenverlauf ist in Figur 2 weiterhin im Eintrittspunkt E gekennzeichnet durch den Eintrittswinkel α (alpha) des THz-Sendestrahls Th gegenüber dem lotrechten Radius r, der senkrecht durch die Außenfläche 4a verläuft durch die Strecke E - M gebildet ist, und entsprechend dem Austrittswinkel β (beta) zwischen der Sehne s und dem lotrechten Radius der Strecke E - M. Als δ (delta) ist der Winkel zwischen der Sehne s und der Strecke E - PX eingezeichnet, mit y (gamma) der Winkel des lotrechten Radius E-M gegenüber dem Projektionspunkt PM, der sich als senkrechte Projektion des Punktes E auf die optische Achse A-SM ergibt.

In diesem Strahlendiagramm bzw. dieser geometrischen Zeichnung sind somit folgende Strecken bekannt:
- Lx als horizontaler Abstand zwischen dem Punkt S1 und dem Reflektor 8, insbesondere durch die Laufzeitmessung im Leerraum oberhalb von SO,
- die vertikale Höhe ys zwischen S1 und SM aus der aktiven Verstellung des Transceivers 6, und
- der Außenradius r.

Unbekannt sind hingegen die Wegstrecken x1, x2 und x3 sowie die Sehne s, und der Brechungsindex n.

Bei dieser Messung in Punkt S1 wird die Laufzeit des Radar- Sendestrahls Th gemessen und insbesondere die Laufzeitdifferenz Δt zu der Leermessung ermittelt als Δt = tp1 - tp0.

Die Laufzeit tp1 des THz-Sendestrahls Th vom Sendepunkt S1 ausgehend ergibt sich durch die Wegstrecke x2 in Luft, die nachfolgende Laufzeit in der Sehne s in dem Material mit Brechungsindex n des Rohres 4, und der nachfolgenden Wegstrecke x1 in Luft, und entsprechend zurück, d. h. mit einem Faktor 2.

Aus diesen Messungen kann nunmehr wie folgt der Brechungsindex n ermittelt werden, auch ohne vorherige Kenntnis der Wegstrecken x1, x2, x3 und s. Hierbei wird insbesondere ausgenutzt, dass der Brechungsindex n in dieses Diagramm zweimal eingeht:
- zum einen sind gemäß dem Brechungsgesetz die Winkel α und β festgelegt,
- und weiterhin ist die Laufzeit in der Sehne s von dem Brechungsindex n bestimmt,
so dass der Wert n in diese Gleichungen zweimal eingeht und somit der Brechungsindex n bestimmt werden kann:
Die Laufzeit tP0 im Leerraum erfolgt mit Lichtgeschwindigkeit c0 über die doppelte Strecke Lx, mit $Lx = x 1 + x 2 + x 3 ,$ (Gleichung 1)

Die Laufzeit tP1 enthält entsprechend den doppelten Wert der Laufzeit in den drei Strecken S1 - E , E - A, und A- RA, wobei die Strecken S1 - E und A - RA wiederum die Strecken x2 und x1 darstellen,
d.h. die Strecken x1 und x3 sind in diesen beiden Messungen gleich.
Die gemessene, bekannte Laufzeitverzögerung Δt ergibt sich somit, mit
- der Lichtgeschwindigkeit cn = c / n in der Wandung 4c,
- dem Brechungsindex n als n = sinα / sinβ, durch: $Δt / 2 = c * s * n - c * x 3 ,$

Der Winkel δ (delta) ergibt sich offensichtlich als Differenz zwischen α und β, siehe die Winkel bei E, d.h. $δ = α - β$
- weiterhin gilt im rechtwinkligen Dreieck E, PX, A: $cos δ = x 3 / s ,$ d.h. $x 3 = s * cos \left(α-β\right)$ d. h. $\frac{Δt}{2 c} = s ∗ n - x 3 = s ∗ \frac{sin α}{sin β} - x 3 = s ∗ \left(\frac{sin α}{sin β}-cos\left(α-β\right)\right)$

Mit dem Additionstheorem von cos (α - β) somit: $\frac{Δt}{2 c} = s ∗ \left(\frac{sin α}{sin β}-cos α cos β-sin α sin β\right)$ (Gleichung 2) Weiterhin gilt für das rechtwinklige Dreieck M, E, PM, dass beim Punkt M wiederum der Eintrittswinkel α gleich dem obigen Eintrittswinkel α auftritt, da die optischen Achsen A-S1 und A-SM parallel in x-Richtung verlaufen.
Da die Strecke E - PM als ys gemessen und bekannt ist,
und in dem rechtswinkligen Dreieck M, E, PM gilt: $sinα = ys / r$ (Gleichung 3) kann der Einfallswinkel α direkt ermittelt werden als $α = arcsin \left(ys/r\right)$ (Gleichung 4).

In Gleichung 4 treten nur die bekannten Messwerte ys und r auf, so dass alpha bekannt ist.

Das Dreieck M, A, E weist zwei gleiche Schenkel r auf, so dass für dieses gleichschenklige Dreieck die allgemeine geometrische Formel gilt $cosβ = s / \left(2r\right) , d . h . β = arccos \left.\left(s/2r\right)\right)$ (Gleichung 5),

In Gleichung 2 kann somit der Term cosβ ersetzt werden durch $cosβ = s / \left(2r\right) ,$ weiterhin kann der Term sinβ ersetzt werden durch $sinβ = sin \left(arccos \left(\left(s/\left(2r\right.\right)\right)\right)$
in Gleichung 2 sind somit bekannt der Messwert Δt, die Lichtgeschwindigkeit c= c0 in Luft, weiterhin α und somit sinα, cosα,
so dass lediglich die Größen s und β verbleiben, wobei nach Gleichung 5 auch β durch s und r ersetzt werden kann,
so dass in Gleichung 2 nur die Größe s verbleibt und berechnet werden kann durch die bekannten Werte von c, ys, r, Δt.
Anders beschrieben: Hierbei ergibt sich somit das Gleichungssystem der Gleichungen 2 und 5, d.h. mit zwei Gleichungen, aus denen somit die beiden Unbekannten s und β ermittelt werden können.
In Gleichung 2 ergibt sich hierbei ein analytisch nicht mehr direkt beschreibbarer Wert, aber es können in Gleichung 2 z.B. Taylorreihen bzw. Potenzreihen für die Funktionen sin β und cos β angesetzt werden, d.h. $sin x = {\sum }_{n = 0}^{∞} {\left(-1\right)}^{n} \frac{{x}^{2 n + 1}}{\left(2n+1\right) !} = \frac{x}{1 !} - \frac{{x}^{3}}{3 !} + \frac{{x}^{5}}{5 !} ∓ ⋯$ $cos x = {\sum }_{n = 0}^{∞} {\left(-1\right)}^{n} \frac{{x}^{2 n}}{\left(2n\right) !} = \frac{{x}^{0}}{0 !} - \frac{{x}^{2}}{2 !} + \frac{{x}^{4}}{4 !} ∓ ⋯$ Diese Taylorreihen führen zur beliebig genauen Annäherung von β, sodass eine Ermittlung von β - bereits bei geringer Rechenleistung - in einem Computer erfolgen kann.
Somit kann bei bekanntem β direkt n = sinα / sinβ berechnet werden.

Somit kann bei Aufstellen einer an sich bekannten geometrischen Struktur bzw. eines geometrischen Strahlenverlaufs mit grundsätzlich bekannten Strahlenverläufen, insbesondere gemäß Figur 2 mit den Eigenschaften eines rechtwinkligen Einfalls in Punkt RA am Reflektor 8, unter Heranziehen zweier Eigenschaften des Brechungsindex n, nämlich
- der Beziehung zu α und β gemäß dem Brechungsgesetz, sowie
- die Änderung der Lichtgeschwindigkeit in dem Material in Abhängigkeit vom Brechungsindex n,
   mit den Messgrößen der Laufzeitverzögerung Δt, dem Außenradius r und der vertikalen Position ys direkt der Brechungsindex n ermittelt werden.

Bei dem oben beschriebenen Verfahren ist es somit - anders als in dem eingangs genannten Verfahren der WO 2016/139155 A1 - nicht erforderlich oder vorgesehen, zur Ermittlung des Brechungsindex den Strahlengang durch beide Wandbereiche bzw. einen Strahlenverlauf durch den Innenraum des Messobjektes vorzunehmen, so dass dieses Ermittlungsverfahren insbesondere auch zusätzlich zu anderen Ermittlungen erfolgen kann, oder anstelle anderer Ermittlungen erfolgen kann.

Das erfindungsgemäße Verfahren umfasst somit die Schritte:
- Bereitstellen einer Messvorrichtung mit Radar-Transceiver 6, Führungseinrichtung 7 und Reflektor 8
- Führen eines Messobjektes 4 durch den Messraum 3 und Verstellen des Radar-Transceivers 6 mittels der Führungseinrichtung 7 in vertikaler Richtung y,
- Messen von Laufzeiten in mindestens
   = einer vertikalen Position S0 außerhalb des Messobjektes 4, d.h. als Leermessung des Messraums 3 außerhalb des Messobjektes 4,
   = in einer vertikalen Position S1, in der der Radar-Transceiver 6 ein Signal mit nur einem einzigen Totalreflexionspeak P1 liefert, ohne zusätzliche Reflexionspeaks oder Teilreflexionspeaks an der Innenfläche 4b und Außenfläche 4a, unter Ermittlung der vertikalen Position ys von S1 und unter Messung der Laufzeit tP1
   - Ermitteln eines Außenradius r des Messobjektes 4, z. B. aus der vertikalen Verstellung des Radar-Transceivers 6 unter Auswertung des Messsignals,
   - nachfolgende mathematische Berechnung von n aus den Messungen.

Somit sind r und n bekannt, die Wanddicken, d.h. die Differenz von Außenradius r und Innenradius ri kann aus einer Messung im Punkt SM erfolgen, der sich eindeutig aus dem Messsignal ergibt als Signal mit Teilreflexionen an 4a und 4b.

Erfindungsgemäß kann somit auch gemäß Fig. 5 gemäß dem Verfahren der DE 10 2020 120 547 A1 eine Vermessung bei z. B. Fehlen eines Innen-Reflexionspeaks an einer Innenfläche 4b erfolgen, da bei bekanntem Brechungsindex n anhand der Leermessung und der Transmissionsmessung in den Punkten S1 und SM auch bei Fehlen der Reflexion an einer Grenzfläche die Position der Wandfläche und die entsprechenden Schichtdicken abgeschätzt werden können.

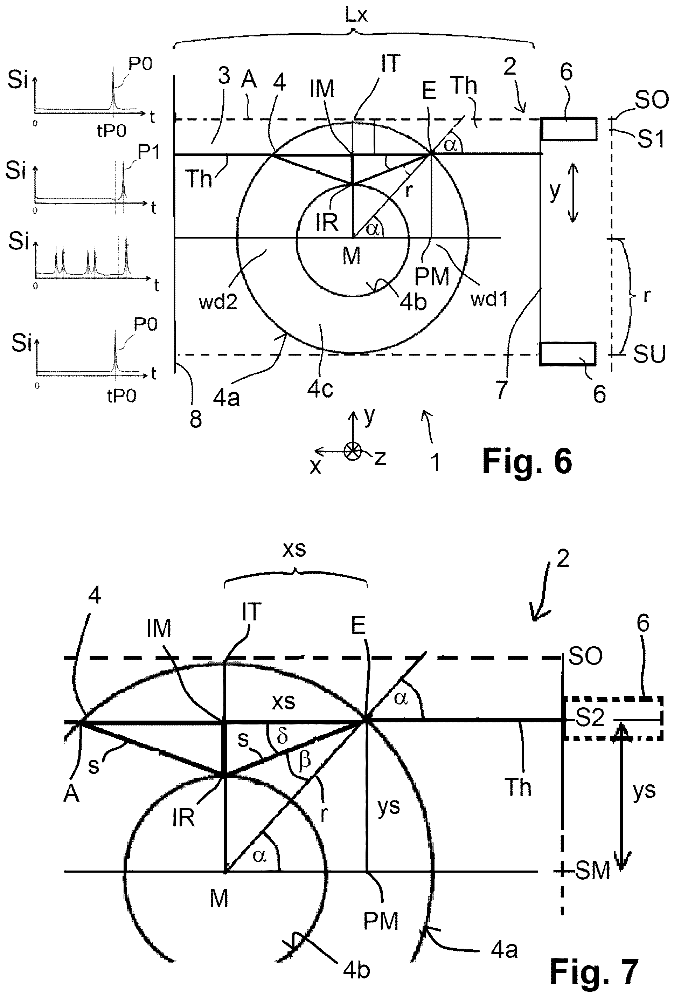

Somit wird beim Verstellen des Transceivers 6 von der oberen Position SO ausgehend zunächst die Position S1 erreicht, in der gemäß Fig. 1, 2 der Total-Reflexionspeak P1 gemessen wird. Wenn nachfolgend der Transceiver 6 weiter vertikal in Y-Richtung nach unten verstellt wird, wird entsprechend die in der Wandung 4c verlaufende Sehne S mit nach unten verstellt. Somit ändert sich der Eintrittspunkt E, wobei sich der Winkel γ verringert,da die Sehne s flacher verläuft. Nachfolgend wird somit - noch bevor die mittlere Position SM erreicht wird - im Allgemeinen die Position S2 der Figur 6 erreicht, in der die Sehne s, d.h. der in das Rohr 4 gebrochene Radar-Sendestrahl Th - gegen die Innenfläche 4b gelangt und somit unter einem flachen Winkel totalreflektiert wird, d. h. es wird das Totalreflexions-Kriterium vom Übergang vom dichten Medium des Rohres 4 mit dem hohen Brechungsindex n gegenüber der Luft des Innenraums mit Brechungsindex n0=1 erfüllt.

In der Position S2 der Figur 6 und 7 liegt ein symmetrischer Verlauf vor, gemäß dem Radar-Sendestrahl Th vom Eintrittspunkt E in der Sehne sderartig gegen den oberen Punkt IR der Innenfläche 4b gelangt, dass er nach Totalreflexion symmetrisch hochreflektiert wird zum Austrittspunkt A. Somit ist die geometrische Ausbildung symmetrisch gegenüber der vertikalen Linie von dem Mittelpunkt M - zu dem oberen Punkt IT der Außenfläche 4a.

Der Radar-Sendestrahl Th verläuft somit vom Punkt S2 ausgehend zunächst in X-Richtung bis zum Eintrittspunkt E in die Außenfläche 4a, wird dort gemäß dem Snelliusschen Brechungsgesetz nach innen gebrochen und verläuft als Sehne s durch die Wandung 4c, bis die Sehne s an den oberen Punkt IR der Innenfläche 4b gelangt, und von dort wiederum symmetrisch als Sehne s bis zum Austrittspunkt A verläuft, wobei der Austrittspunkt A und der Eintrittspunkt E auf gleicher vertikaler Höhe S2 liegen, woraufhin dann der Radar-Sendestrahl Th vom Austrittspunkt A wiederum in X-Richtung weiter verläuft und senkrecht auf den Reflektor 8 trifft, so dass er hier zurückreflektiert wird und in dem gleichen Strahlenverlauf zurück verläuft, so dass in S2 ein Total-Reflexionspeak, ohne Teil-Reflexionspeaks, gemessen wird.

Somit kann die die Position S2 auch von der Messung in Position S1 unterschieden werden, da sie nachfolgend in einer tieferen Y-Position als die erste Position S1 in Figur 1, 2 erfolgt.

Die besondere geometrische Anordnung der Position S2 ermöglicht wiederum eine direkte Bestimmung des Brechungsindex n, da der Brechungsindex in diese optische Anordung wiederum doppelt eingeht:
Zum einen geht der Brechungsindex n gemäß dem Snelliusschen Brechungsgesetz in die geometrische Beziehung zwischen den Winkeln alpha und beta ein.

Zum anderen bestimmt der Brechungsindex n die Laufzeitverzögerung,
so dass wiederum aus diesen beiden Beziehungen der Brechungsindex n bestimmt werden kann:

### I. Ermittlung aus dem Snelliusschen Brechungsgesetz:

Die Strecke ys, d. h. der vertikale Abstand des Punktes S2 von der mittleren Position SM, ist durch die Verstellung des Transceivers 6 bekannt, wobei ys in Fig. 6, 7 dem Abstand E - PM sowie auch dem Abstand IM - M entspricht.

Weiterhin ist auch wiederum der Außenradius r aus einer der möglichen vorherigen Messungen, d. h. wiederum als mechanische Messung, optischen Vermessung mittels Laser, Ultraschall und/oder durch die vertikale Verstellung des Transceivers 6 zwischen den Positionen SO, SM und SU bekannt.

Somit sind in dem Dreieck E, PM, M, bzw. dem hierzu gleichen oder entsprechenden Dreieck E, IM, M, die Hypotenuse r und die Kathete ys bekannt.

Hierbei wird der Eintrittswinkel α wiederum, aufgrund der parallelen Strahlenverläufe bzw. parallelen Achsen in den Punkten S2 und SM, auch am Mittelpunkt M ausgebildet, wie aus Figur 6 ersichtlich ist, so dass das Dreieck E, PM, M, bzw. das hierzu identische Dreieck M, IM, E, eindeutig bestimmt ist und somit der Eintrittswinkel α direkt aus den Messgrößen ys und r berechnet werden kann als $sinα = ys / r .$

Somit ist der Eintrittswinkel α bekannt,

Gemäß dem Brechungsgesetz ist sinα / sinβ = n, $so dass β = arcsin \left(sinα/n\right)$ (Gleichung 6)

### II. Ermittlung aus der Laufzeitmessung

Der Radar-Sendestrahl Th verläuft von S2 bis E, gelangt dort wiederum unter einem Eintrittswinkel α gegenüber dem Lot auf die Außenfläche 4a und tritt unter einem Eintrittswinkel β gegenüber dem lotrechten Radius r in die Wandung 4c, verläuft als Sehne s bis zum Reflexionspunkt IR, mit nachfolgend symmetrischem Verlauf zum Austrittspunkt 4. Bei dieser Messung in dem Punkt S2 wird wiederum zunächst die Laufzeitdifferenz Δt gegenüber der Leermessung oberhalb von SO ermittelt. Entsprechend den vorherigen Ausführungen zu Figur 1, 2 kann die Strecke Lx, d. h. der Transceiver-Abstand des Transceivers 6 zum Reflektor 8, in Teilstrecken x1, x2, xs unterteilt werden, d.h. die Teilstrecken
die Teilstrecke x1 = S2 - E vom Sendepunkt S2 zum Eintrittspunkt E,
die Teilstrecke x3 = E - A vom Eintrittspunkt E zum Austrittspunkt A, wobei x3 somit dem Doppelten der Strecke xs = E - IT entspricht, d.h. $x 3 = 2 * \left(xs\right)$
sowie die Teilstrecke x2 von dem Austrittspunkt A zum Reflektor 8.

Hierbei legt der Radar-Sendestrahl Th wiederum die Teilstrecken x1 und x2 in beiden Positionen der Leermessung bei S0 sowie der Messung in S2 identisch zurück, so dass die Laufzeitdifferenz Δt bzw. Laufzeitverzögerung wiederum der Wegstrecke in der Wandung 4c zugeordnet werden kann, d. h. die gemessene, bekannte Laufzeitverzögerung Δt ergibt sich somit, mit
- der Lichtgeschwindigkeit cn = c / n in der Wandung 4c,
- dem Brechungsindex n mit n = sinα / sinβ, durch: $Δt / 2 = 2 * \left(c*s*n-c*xs\right)$ $Δt = 4 * c * \left(s*n-xs\right)$

Diese Gleichung von Fig. 6, 7 sich unterscheidet gegenüber Fig. 2 um den Faktor 2, da im Vergleich zu Fig. 2 die halben Strecken als s und xs bezeichnet werden. $\begin{matrix}xs ist bekannt aus \\ = sowohl xs = r * cosα \\ = als auch nach der Pythagoras - Gleichung {xs}^{2} + {ys}^{2} = {r}^{2}\end{matrix}$ da ys, r, α bekannt sind.
Somit ergibt sich mit xs = r * cosα die Laufzeit-Gleichung $Δt = 4 * c * \left(s*n-r*cosα\right)$ (Gleichung 7) wobei in Gleichung 6 nur s und n unbekannt sind.
Hierbei ergibt sich auch eine geometrische Beziehung zwischen s und β:
In dem Dreieck E, IM, IR, ist der Winkel δ durch xs und s geometrisch festgelegt ist als $cos δ = xs / s ,$
weiterhin ergibt sich β = α - δ
d. h. $s = xs / \left(cos δ\right) = xs / cos \left(α-β\right)$
mit bekannten Werten von xs, α.

Somit ergibt sich durch Einsetzen in die Gleichung 7: $Δt = 4 * c * \left(\left(xs*n/cos\left(α-β\right)\right)-r*cosα\right)$ (Gleichung 8)
die zweite Beziehung von β und n,
da die weiteren Größen bekannt sind.

Somit kann aus einerseits dem Brechungsgesetz und andererseits der Laufzeitberechnung, in der der Brechungsindex als Laufzeitverzögerung eingeht,
d.h. durch zum einen Gleichung 6 und zum anderen Gleichung 8, sowohl von β als auch n ermittelt werden.

Es ergibt sich wiederum ein Gleichungssystem von zwei Gleichungen für die Größen n und β, das somit wiederum eindeutig gelöst werden kann, insbesondere durch ein Rechensystem bzw. Taylor-Entwickung. Es zeigt sich auch, dass geringe Deformationen der Innenfläche 4b keinen größeren Einfluss haben, da zum einen derartige Deformationen insbesondere in Seitenbereichen des Innenraums bzw. der Innenfläche 4b als Sagging auftregen, aber nicht zu sehr im oberen Bereich und unteren Bereich, weiterhin diese geometrische Ausbildung auch - vertikal gespiegelt - in dem entsprechenden geometrischen unteren Punkt, mit dem negativen Abstand -ys zum mittleren Punkt SM, durchgeführt werden kann, und hier eine Ermittlung bzw. Überprüfung durchgeführt werden kann.

Bei dieser Ausführungsform kann weiterhin somit rein geometrisch auch die Wanddicke zwischen den Punkten IT und IR berechnet werden, d.h. ohne weitere Messung ermittelt werden, als Summe
a) der Strecke zwischen IT und IM und
b) der Strecke zwischen IM und IR:
   zu a): der Abstand ds der Punkte IM, IR kann bestimmt werden aus dem Dreieck E, IR, IM:
   Hierbei sind in der geometrischen Ausbildung die Strecken xs, s bekannt, da bei bekanntem n und α auch β bekannt ist, weiterhin der Winkel δ als Differenz zwischen α auch β bekannt ist.
Somit kann sich der Abstand ds der Punkte IM, IR bestimmt werden aus dem Dreieck E, IR, IM, bei bekanntem s und xs, gemäß der Pythagoras-Beziehung ds² + xs² = s² $oder aus ds = xs * cos δ$ zu b) weiterhin ist der Abstand dss zwischen den Punkten IM, IT direkt aus der vertikalen Verstellung des Transceivers 6 vom Punkt SO zu S2 bekannt. Er ergibt sich weiterhin aber auch, da die Strecke IT- M dem Außenradius r entspricht, aus $dss = r - ys .$

Somit ergibt sich die Wanddicke zwischen den Punkten IT und IR $als wd = ds + dss .$

Weiterhin ergibt sich der Innenradius ri, d.h. der Abstand zwischen den Punkten M und IR, als Differenz $ri = ys - ds$ $bzw . ri = r - wd .$

Somit ist in der Ausführungsform der Figur 6 in der Messposition S2 eine vollständige Bestimmung des Rohres 4, d. h. sowohl des Brechungsindex n, als auch der Wanddicke wd, sowie des Innenradius ri des oberen möglich, ohne Messung von Teilreflexionspeaks, wie es in der Position SM erfolgt.

Diese Messung des Außenradius r, der unteren Wanddicke und des Innenradius ri kann entsprechend auch in der unteren Position von S2, d.h. mit einem (negativen) Abstand ys unterhalb von SM, durchgeführt werden.

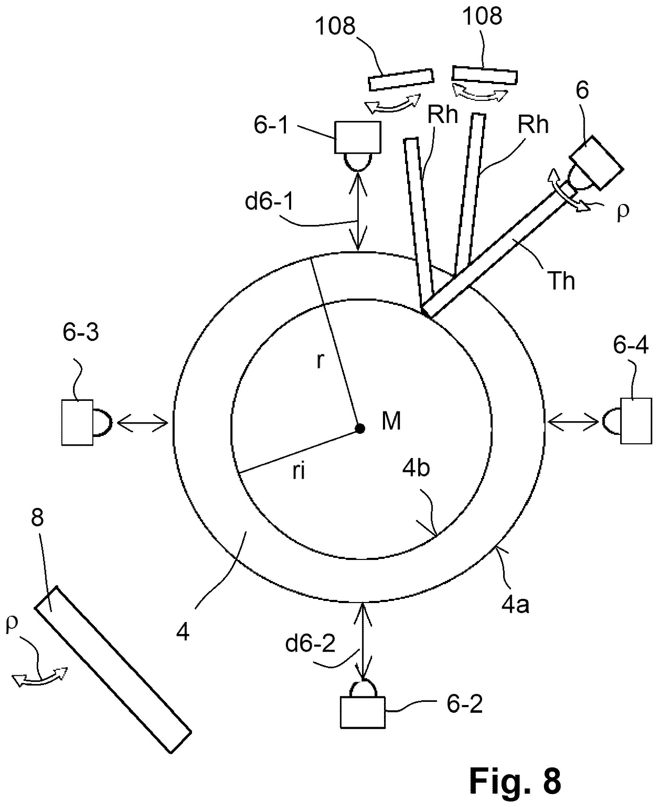

Figur 8 zeigt die Positionierung eines oder mehrerer Transceiver 6-1 und 6-2, sowie weiterhin entsprechend auch 6-3 und 6-4, in senkrechten Positionen zum Rohr 4. Da der Abstand der beiden Transceiver 6-1 und 6-2 zueinander durch die Positionierung selbst bekannt ist, kann hier auch eine Messung des Abstandes der Außenfläche 4a zu den Transceivern 6-1, 6-2 zur Ermittlung des Außendurchmessers r herangezogen werden. Hierbei können die Abstände d6-1 und d6-2 in Luft gemessen werden, d.h. auch ohne Kenntnis des Brechungsindex. Entsprechend kann der Außenradius r zwischen den Transceivern 6-3 und 6-4 ermittelt werden.

In Figur 8 ist ergänzend eine weitere Ausführungsform der Ermittlung des Brechungsindex n und weiterer Eigenschaften des Rohres 4 durch geeignete geometrische Anordnung und Verstellung von Transceivern gezeigt. Hierbei wird der Transceiver 6 aber geschwenkt, wobei er auch zusätzlich in einer Richtung verstellt werden kann.

Hierbei wird ein Transceiver 6 um einen Schwenkwinkel ρ geschwenkt, so dass sich aufeinander folgend wiederum die besonderen Positionen der vorangegangenen Figuren 1,2 sowie Figuren 6, 7 einstellen, wobei ein Reflektor hinter dem Rohr 4 positioniert werden kann, oder auch ein Reflektor 108 zur Aufnahme von Teilreflexionspeaks an den Grenzflächen 4a und 4b. der Reflektor 108 kann hierbei insbesondere auch geschwenkt werden, so dass durch die kombinierten und/oder aufeinander folgenden Schwenkbewegungen ein Erfassung der Grenzflächen erfolgen kann. Hierbei können z.B. auch mehrere Reflektoren 108 eingesetzt werden.

Auch in dieser geometrischen Ausbildung, d. h. mit Schwenken und Ermittlung des Schwenkwinkels des Transceivers 6 und gegebenenfalls des Reflektors 8 und/oder von Reflektoren 108, statt oder ergänzend zu der vertikalen Verstellung in Y-Richtung, lässt sich somit eine entsprechende geometrische Ermittlung und, unter Messung der Laufzeitdifferenz, eine Bestimmung des Brechungsindex n durchführen, so dass auch hier wiederum eine vollständige Vermessung des Rohres 4 erfolgt. Insbesondere kann der Transceiver 6 derartig geschwenkt werden, dass er die symmetrische mittlere Position entsprechend SM erreicht, in der seine optische Achse A6 senkrecht durch den Mittelpunkt M und somit durch die Wandflächen 4a, 4b erfolgt. Weiterhin werden beim Schwenken entsprechende Positionen S1 und S2 gemäß den Ausführungsformen der Figuren S1, S2, und S6, S7 erreicht.

### Bezugszeichenliste

- 1: Radar-Messanordnung
- 2: Radar-Messvorrichtung
- 3: Messraum
- 4: Messobjekt, Rohr
- 4a: Außenfläche, Außenwand
- 4b: Innenfläche, Innenwand
- 4c: Wandung
- 6: Radar-Transceiver
- 7: Führungseinrichtung
- 8: Reflektor, Spiegel
- 10: Steuer- und Auswerteeinrichtung
- 108: Reflektoren
- n: Brechungsindex
- s: Sehne
- wd2: Wanddicke
- Si: Messsignal
- Th: Radar-Sendestrahl
- A: Austrittspunkt
- E: Eintrittspunkt
- P1: Totalreflexionspeak
- M: Mittelpunkt
- x: Längsrichtung, Richtung zwischen Radar-Transceiver 6 und Reflektor 8
- y: vertikale Richtung, Verstellrichtung des Radar-Transceivers 6
- z: Objekt-Verstellrichtung, Transportrichtung des Rohres 4
- r: Außenradius
- ri: Innenradius
- tp1: Laufzeit
- tp0: Leerlaufzeit
- Δt: Laufzeitdifferenz, Laufzeitverzögerung
- c0: Lichtgesschwindigkeit

- LX: Receiver-Abstand des Radar-Transceivers 6 zum Reflektor 8
- x1, x2, x3: Teilstrecken von Lx
- A, E, M, PM, SM, PX, S0, SU,: geometrische Punkte in Figur 1, 2, 6
- RA: geometrische Punkte in Figur 2, Reflexionspunkt
- IT, IR, IM: geometrische Punkte in Figur 6
- S1: Messposition der Fig. 1, 2
- S2: Messposition der Fig. 6

- α: Eintrittswinkel
- β: Austrittswinkel
- γ, δ, ρ: weitere Winkel

## Patentansprüche

1. Radar-Messverfahren zum Vermessen eines rohrförmigen Messobjektes (4), insbesondere nach seiner Extrusion, mit folgenden Schritten: Führen des rohrförmigen Messobjektes (4) in einer Objekt-Verstellrichtung (z) durch einen Messraum (3) zwischen einem Radar-Transceiver (6) und einem Reflektor (8),
- Ausgeben eines Radar-Sendestrahls (Th) von dem Radar-Transceiver (6) entlang seiner optischen Achse (A-SO) in einer Querrichtung (x) durch den Messraum (3) zu dem Reflektor (8) und zurück zu dem Radar-Transceiver (6), unter Ermittlung einer Leer-Laufzeit (tp0),
- Verstellen des Radar-Transceivers (6) in einer Verstellrichtung (y), die vorzugsweise senkrecht zur Querrichtung (x) verläuft, und Ausgabe und Empfang des Radar-Sendestrahls (Th) in unterschiedlichen Verstellpositionen (SO, S1, SM, SU),
- bei Detektion eines Messsignals, das aufweist:
= einen Totalreflexionspeak (P1) mit einer Laufzeitverschiebung (Delta t) gegenüber der Leermessung, und
= keine weitere Teilreflexions-Peaks,
Messen der Verstellposition (ys) und der Laufzeitverschiebung (Delta t),
- Messen eines Außenradius (r) des rohrförmigen Messobjektes (4), und
- Ermitteln des Brechungsindex (n) des rohrförmigen Messobjektes (4) aus den aufgenommenen Werten.

2. Radar-Messverfahren nach Anspruch 1, **dadurch gekennzeichnet, dass** die Verstellrichtung (y) des Radar-Transceivers (6) linear ist, insbesondere senkrecht zu der Objekt-Verstellrichtung (z) und/oder zu einer optischen Achse des Radar-Transceivers (6).

3. Radar-Messverfahren nach Anspruch 1 oder 2, **dadurch gekennzeichnet, dass** die Verstellung des Radar-Transceivers (6) zumindest teilweise eine Schwenkverstellung ist, insbesondere mit einem Schwenkwinkel (ρ) senkrecht zu der Objekt-Verstellrichtung (z).

4. Radar-Messverfahren nach einem der vorherigen Ansprüche, **dadurch gekennzeichnet, dass** eine Position (S1) des Radar-Transceivers (6) eingenommen und vermessen wird, in der der Radar-Sendestrahl (Th) durch eine Wandung des Messobjektes (4) ohne Reflektion an einer Innenfläche (4b) erfolgt, unter Detektion eines Total-Reflektionspeaks (P1).

5. Radar-Messverfahren nach einem der vorherigen Ansprüche, **dadurch gekennzeichnet, dass** eine Position (S1) des Radar-Transceivers (6) eingenommen und vermessen wird, in der der Radar-Sendestrahl (Th) in einem Eintrittspunkt (E) durch eine Außenfläche (4a) des Messobjektes (4) tritt, mit nachfolgender Reflektion, insbesondere Totalreflektion an einer Innenfläche (4b) und nachfolgendem Verlauf durch einen Austrittspunkt (A) zu dem Reflektor (8), unter Detektion eine Total-Reflektionspeaks (P1),
insbesondere mit symmetrischer Ausbildung des Strahlenverlaufs nach Reflektion an der Innenfläche (4b).

6. Radar-Messverfahren nach einem der vorherigen Ansprüche, **dadurch gekennzeichnet, dass** der Brechungsindex (n) ermittelt wird aus dem Gleichungssystem $\frac{Δt}{2 c} = s ∗ \left(\frac{sin α}{sin β}-cosα cosβ-sinα sinβ\right)$ (Gleichung 2) $α = arcsin \left(ys/r\right)$ (Gleichung 4). $β = arccos \left(s/\left(2r\right)\right)$ (Gleichung 5), mit den Größen
Delta t: Laufzeitverschiebung,
ys: vertikale Position,
r: Außenradius
c: Lichtgeschwindigkeit in Luft

7. Radar-Messverfahren nach einem der vorherigen Ansprüche, **dadurch gekennzeichnet, dass** der Außenradius (r) ermittelt wird nach einem oder mehreren der folgenden Messverfahren:
- mechanische Messung,
- optische Messung, z.B. mittels Laser,
- Ultraschall,
- zusätzliche Radar-Sensoren in einer anderen geometrischen Anordnung, z.B. vertikal zu der optischen Achse,
- Verstellen des Radar-Transceivers (6) in der vertikalen Richtung (y) unter Aufnahme des Messsignals, wobei der Außenradius (r) ermittelt wird als vertikaler Abstand (ys) zwischen einem oberen äußeren Punkt (SO) am oberen Rand des rohrförmigen Messobjektes (4) und dem gegenüberliegenden unteren äußeren Punkt (SO, SU) und/oder zwischen einem mittleren Punkt (SM), bei dem der Radar-Sendestrahl (Th) senkrecht durch die Außenfläche (4a) und Innenfläche (4b) des rohrförmigen Messobjektes (4) tritt, und einem der äußeren Punkte (SO, SU).

8. Radar-Messverfahren nach einem der vorherigen Ansprüche, **dadurch gekennzeichnet, dass** der Radar-Sendestrahl (Th) in dem Frequenzbereich ausgegeben wird von 10 GHz bis 50 THz, insbesondere 10 GHz bis 10 THz, insbesondere 20 GHz oder 50 GHz bis 3 THz,
z. B. als Frequenzmodulation, insbesondere FMCW-Radar und/oder als gepulste Strahlung, oder als direkte Laufzeitmessung.

9. Radar-Messverfahren nach einem der vorherigen Ansprüche, **dadurch gekennzeichnet, dass** der Radar-Transceiver (6) auf einer Führungseinrichtung (7) fortlaufend in der Verstellrichtung (y) verstellt, insbesondere reversiert wird.

10. Radar-Messverfahren nach einem der vorherigen Ansprüche, **dadurch gekennzeichnet, dass** aus dem ermittelten Brechungsindex (n) und einer mittleren Messung in einer mittleren Position (SM) unter Messung von Zeiten (t1, t2, t3, t4) von Teilreflexions-Peaks an der Außenwand (4a) und der Innenwand (4b), eine vordere Wanddicke (wd1) eines vorderen Wandbereichs vor dem THz-Transceiver (6), und/oder eine hintere Wanddicke (wd2) eines hinteren Wandbereichs vor dem Reflektor (8) ermittelt wird.

11. Radar-Messvorrichtung (2) zur Vermessung eines rohrförmigen Messobjektes (4), wobei die Radar-Messvorrichtung (2) aufweist:
einen Radar-Transceiver (6) zum Ausgeben eines Radar-Sendestrahls (Th) entlang seiner optischen Achse (A-SM, A-S1) in einer Querrichtung (x),
eine Führungseinrichtung (7) zum Verstellen des Radar-Transceivers (6) in einer Verstellrichtung (y),
einen Reflektor (8), der in Längsrichtung (x) beabstandet von dem Radar-Transceiver (6) vorgesehen ist,
wobei ein Messraum (3) zwischen dem Reflektor (8) und dem Radar-Transceiver (6) ausgebildet ist, und
eine Steuer- und Auswerteeinheit (10), die die Laufzeit (t) des Radar-Sendestrahls (Th) von dem Radar-Transceiver (6) zu dem Reflektor (8) und zurück zum Radar-Transceiver (6) detektiert und die Laufzeitmessungen den Positionen (y) des Radar-Transceivers (6) zuordnet, wobei die Steuereinrichtung (10) ausgebildet ist, einen Brechungsindex (n) des Materials des Messobjektes (4) zu ermitteln aus
- mindestens einer Leermessung unter Ermittlung einer Leerlaufzeit (tP0),
- einem Außenradius des Messobjektes (4),
- und mindestens einer Wandbereichs-Transmissions-Messung in einer vertikalen Messposition (S1) des Radar-Transceivers (6), in der im Messsignal (Si)
= nur ein Totalreflexions-Peak auftritt,
= ohne Teilreflexions-Peaks (Pt1, Pt2, Pt3, Pt4) der Außenfläche (4a) und der Innenfläche (4b) des rohrförmigen Messobjektes (4),
unter Ermittlung einer Laufzeitverzögerung (Δt) in der vertikalen Messposition (S1) gegenüber der Leermessung.

12. Radar-Messvorrichtung (2) nach Anspruch 11, **dadurch gekennzeichnet, dass** die Verstellrichtung (y) linear ist und senkrecht zu der optischen Achse verläuft, und
die Steuer- und Auswerteeinheit (10) die Laufzeit (t) des Radar-Sendestrahls (Th) von dem Radar-Transceiver (6) zu dem Reflektor (8) und zurück den vertikalen Positionen (y) des Radar-Transceivers (6) zuordnet.

13. Radar-Messvorrichtung (2) nach Anspruch 11 oder 12, **dadurch gekennzeichnet, dass** die Führungseinrichtung (7) zum Schwenken des Radar-Transceivers (6) ausgebildet ist.

## Claims

1. Radar measurement method for measuring a tubular measured object (4), in particular after its extrusion, said method including the following steps:
- guiding the tubular measured object (4) in an object adjusting direction (z) through a measuring space (3) between a radar transceiver and a reflector (8),
- emitting a radar transmitting beam (Th) from the radar transceiver (6) along its optical axis (A-SO) in a transverse direction (x) through the measuring space (3) towards the reflector (8) and back towards the radar transceiver (6), while determination an empty time of flight (tp0),
- adjusting the radar transceiver (6) in an adjusting direction (y) which is in particular perpendicular to the transverse direction (x), and emitting and receiving the radar transmitting beams at various adjustment positions (SO, S1, SM, SU),
- upon detecting a measurement signal comprising:
= a total reflection peak (P1) at a time-of-flight shift (Delta t) in relation to the empty measurement, and
= no further partial reflection peaks,
measuring the adjustment position (ys) and the time-of-flight shift (Delta t),
- measuring an external radius (r) of the tubular measured object (4), and
- determining the refractive index (n) of the tubular measured object (4) from the values recorded.

2. Radar measurement method according to claim 1, **characterized in that** the adjusting direction (y) of the radar transceiver (6) is linear, in particular perpendicular to the adjusting direction (z) of the object and/or to an optical axis of the radar transceiver (6)

3. Radar measurement method according to claim 1 or 2, **characterized in that** the adjustment of the radar transceiver (6) is, at least in part, a swiveling adjustment, wherein the swing angle (ρ) preferably runs perpendicular to the object adjusting direction (z).

4. Radar measurement method according to one of the preceding claims, **characterized in that** a position (S1) of the radar transceiver (6) is adopted and measured in which the radar transmitting beam (Th) passes through a wall of the measured object (4) without reflection on an interior surface (4b), while detecting a total reflection peak (P1).

5. Radar measurement method according to one of the preceding claims, **characterized in that** a position (S1) of the radar transceiver (6) is adopted and measured, in which the radar transmitting beam (Th) passes at an entry point (E) through an exterior surface (4a) of the measured object (4), with subsequent reflection - in particular total internal reflection - at an interior surface and subsequent propagation through an exit point (A) towards the reflector (8), while detecting a total reflection peak (P1),
in particular where the beam path is symmetrical after reflection from the inner surface (4b)..

6. Radar measurement method according to one of the preceding claims, **characterized in that** the refractive index (n) is determined from the system of equations $\frac{Δt}{2 c} = s ∗ \left(\frac{sin α}{sin β}-cos α cos β-sin α sin β\right)$ (equation 2) $α = arcsin \left(ys/r\right)$ (equation 4). $β = arccos \left(s/\left(2r\right)\right)$ (equation 5), with the variable
delta t: time-of-flight shift,
ys: vertical position,
r: external radius
c: speed of light in air.

7. Radar measurement method according to one of the preceding claims, **characterized in that** the external radius (r) is determined according to one or more of the following measuring method(s):
- mechanical measurement,
- optical measurement, for example with a laser,
- ultrasound,
- additional radar sensors in another geometric arrangement, for example perpendicular to the optical axis,
- adjustment of the radar transceiver (6) in the vertical direction (y) while receiving the measurement signal, where the external radius (r) is determined as a vertical distance (ys) according to one or more of the following measuring method(s):
between an upper outer point (SO) at the upper edge of the tubular measured object (4) and the opposite lower outer point (SO, SU) and/or
between a middle point (SM) at which the radar transmitting beam (Th) passes perpendicularly through the exterior surface (4a) and interior surface (4b) of the tubular measured object (4), and one of the outer points (SO, SU).

8. Radar measurement method according to one of the preceding claims, **characterized in that** the radar transmitting beam (Th) is emitted in the frequency range between 10 GHz and 50 THz, in particular, 10 GHz and 10 THz, in particular, 20 GHz or 50 GHz and 3 THz,
e.g. as frequency modulation, in particular FMCW radar and/or as pulsed radiation, or as a direct time-of-flight measurement.

9. Radar measurement method according to one of the preceding claims, **characterized in that** the radar transceiver (6) is adjusted on a guide means (7) continuously in the adjusting direction (y).

10. Radar measurement method according to one of the preceding claims, **characterized in that** a front wall thickness (wd1) of a front wall region before the THz transceiver (6), and/or a rear wall thickness (wd2) of a rear wall region before the reflector (8) is determined from the determined refractive index (n) and a middle measurement at a middle position (SM) while measuring times (t1, t2, t3, t4) of partial reflection peaks on the exterior wall (4a) and the interior wall (4b).

11. Radar measuring device (2) for measuring a tubular measured object (4), the radar measuring device (2) comprising:
a radar transceiver (6) for emitting a radar transmitting beam (Th) along its optical axis in a transverse direction (x),
a guide means (7) for adjusting the radar transceiver (6) in an adjusting direction (y),
a reflector (8) provided spaced apart from the radar transceiver (6) in a longitudinal direction (x),
where a measuring space (3) between the reflector (8) and the radar transceiver (6) is formed, and
a controller and evaluation unit (10) detecting the time of flight (t) of the radar transmitting beam (Th) from the radar transceiver (6) to the reflector (8) and back to the radar transceiver (6) and relating the time-of-flight measurements to the positions (y) of the radar transceiver (6), the controller means being adapted to determine a refractive index of the material of the measured object (4) from
- at least one empty measurement with determination of an empty time of flight (tP0),
- an external radius of the measured object (4),
- and at least one wall region transmission measurement in a vertical measuring position (S1) of the radar transceiver (6).
in which wall region transmission measurement the measuring signal (Si) comprises
= only one total reflection peak,
= no partial reflection peaks (Pt1, Pt2, Pt3, Pt4) of the exterior surface (4a) and the interior surface (4b) of the tubular measured object (4), while determining a time-of-flight delay (Δt) in the vertical measuring position (S1) compared to the empty measurement.

12. Radar measuring device (2) according to claim 14, **characterized in that** the adjusting direction (y) is linear and runs perpendicular to the optical axis, and
the controller and evaluation unit (10) relates the time of flight (t) of the radar transmitting beam (Th) from the radar transceiver (6) to the reflector (8) and back to the vertical positions (y) of the radar transceiver (6).

13. Radar measuring device (2) according to claim 14, **characterized in that** the guide means (7) is adapted to swivel the radar transceiver (6).

## Revendications

1. Procédé de mesure radar pour mesurer un objet de mesure tubulaire (4), en particulier après son extrusion, avec les étapes suivantes :
- Guidage de l'objet de mesure tubulaire (4) dans une direction de déplacement d'objet (z) à travers un espace de mesure (3) entre un émetteur-récepteur radar (6) et un réflecteur (8),
- Émission d'un faisceau d'émission radar (Th) par l'émetteur-récepteur radar (6) le long de son axe optique (A-SO) dans une direction transversale (x) à travers l'espace de mesure (3) vers le réflecteur (8) et retour vers l'émetteur-récepteur radar (6) en déterminant un temps de parcours par défaut (tp0),
- Déplacement de l'émetteur-récepteur radar (6) dans une direction de déplacement (y) de préférence perpendiculaire à la direction transversale (x), et émission et réception du faisceau d'émission radar (Th) dans différentes positions de déplacement (SO, S1, SM, SU),
- en cas de détection d'un signal de mesure qui indique :
- un pic de réflexion totale (P1) avec un décalage de temps de parcours (Δt) par rapport à la mesure par défaut, et
- aucun autre pic de réflexion partielle,
Mesure de la position de déplacement (ys) et du décalage de temps de parcours (Δt),
- Mesure d'un rayon externe (r) de l'objet de mesure tubulaire (4), et
- Détermination de l'indice de réfraction (n) de l'objet de mesure tubulaire (4) à partir des valeurs enregistrées.

2. Procédé de mesure radar selon la revendication 1, **caractérisé en ce que** la direction de déplacement (y) de l'émetteur-récepteur radar (6) est linéaire, en particulier perpendiculaire à la direction de déplacement de l'objet (z) et/ou à l'axe optique de l'émetteur-récepteur radar (6).

3. Procédé de mesure radar selon la revendication 1 ou 2, **caractérisé en ce que** le déplacement de l'émetteur-récepteur radar (6) est au moins partiellement un pivotement, en particulier avec un angle de pivotement (ρ) perpendiculaire à la direction de déplacement de l'objet (z).

4. Procédé de mesure radar selon l'une des revendications précédentes, **caractérisé en ce qu'**on occupe et mesure une position (S1) de l'émetteur-récepteur radar (6) dans laquelle le faisceau d'émission radar (Th) est émis à travers une paroi de l'objet de mesure (4) sans réflexion sur une surface interne (4b) à détection d'un pic de réflexion totale (P1).

5. Procédé de mesure radar selon l'une des revendications précédentes, **caractérisé en ce qu'**on occupe et mesure une position (S1) de l'émetteur-récepteur radar (6) dans laquelle le faisceau d'émission radar (Th) passe par un point d'entrée (E) à travers une surface externe (4a) de l'objet de mesure (4), avec ensuite réflexion, en particulier réflexion totale sur une surface interne (4b) puis parcours à travers un point de sortie (A) jusqu'au réflecteur (8) à détection d'un pic de réflection totale (P1), en particulier avec formation symétrique du parcours du rayon après réflexion sur la surface interne (4b).

6. Procédé de mesure radar selon l'une des revendications précédentes, **caractérisé en ce que** l'indice de réfraction (n) est déterminé à partir du système d'équation $\frac{Δt}{2 c} = s ∗ \left(\frac{sin α}{sin β}-cos α cos β-sin α sin β\right)$ (Equation 2) $α = arcsin \left(ys/r\right)$ (Equation 4) $β = arccos \left(s/\left(2r\right)\right)$ (Equation 5) avec les grandeurs suivantes :
Δt : Décalage du temps de parcours
Ys : Position verticale
r : Diamètre externe
c : Vitesse de la lumière dans l'air

7. Procédé de mesure radar selon l'une des revendications précédentes, **caractérisé en ce que** le rayon externe (r) est déterminé selon au moins l'un des procédés de mesure suivants :
- mesure mécanique,
- mesure optique, p. ex. par laser
- ultrasons,
- capteurs radars supplémentaires dans une autre disposition géométrique, p. ex. verticalement par rapport à l'axe optique,
- déplacement de l'émetteur-récepteur radar (6) en direction verticale (y) à réception du signal de mesure, où le rayon externe (r) est déterminé comme l'intervalle vertical (ys) entre un point extrême supérieur (SO) à la limite supérieure de l'objet de mesure tubulaire (4) et le point extrême inférieur opposé (SO, SU), et/ou entre un point médian (SM), où le faisceau d'émission radar (Th) passe perpendiculairement à travers la surface externe (4a) et la surface interne (4b) de l'objet de mesure tubulaire (4), et l'un des points externes (SO, SU).

8. Procédé de mesure radar selon l'une des revendications précédentes, **caractérisé en ce que** le faisceau d'émission radar (Th) est émis dans la gamme de fréquences de 10 GHz à 50 THz, en particulier de 10 GHz à 10 THz, en particulier de 20 GHz ou 50 GHz à 3 THz, p. ex. en modulation de fréquence, en particulier onde radar à modulation de fréquence et/ou émission pulsée, ou sous forme de mesure directe de temps de parcours.

9. Procédé de mesure radar selon l'une des revendications précédentes, **caractérisé en ce que** l'émetteur-récepteur radar (6) se déplace en continu sur un dispositif de guidage (7) dans la direction de déplacement (y), en particulier fait demi-tour.

10. Procédé de mesure radar selon l'une des revendications précédentes, **caractérisé en ce qu'**à partir de l'indice de réfraction (n) déterminé et d'une mesure moyenne dans une position moyenne (SM), par la mesure de temps (t1, t2, t3, t4) de pics de réflexion partielle sur la paroi externe (4a) et la paroi interne (4b), on détermine une épaisseur de paroi avant (wd1) d'une zone de paroi avant devant l'émetteur-récepteur THz (6) et/ou une épaisseur de paroi arrière (wd2) d'une zone de paroi arrière devant le réflecteur (8).

11. Dispositif de mesure radar (2) pour mesurer un objet de mesure tubulaire (4), le dispositif de mesure radar (2) comportant :
un émetteur-récepteur radar (6) pour émettre un faisceau d'émission radar (Th) le long de son axe optique (A-SM, A-S1) dans une direction transversale (x),
un dispositif de guidage (7) pour déplacer l'émetteur-récepteur radar
(6) dans une direction de déplacement (y),
un réflecteur (8) prévu espacé de l'émetteur-récepteur radar (6) en direction longitudinale (x),
dans lequel un espace de mesure (3) est constitué entre le réflecteur (8) et l'émetteur-récepteur radar (6), et
une unité de commande et d'évaluation (10) qui détecte le temps de parcours (t) du faisceau d'émission radar (Th) depuis l'émetteur-récepteur radar (6) au réflecteur (8) et retour à l'émetteur-récepteur radar (6) et assigne les mesures de temps de parcours aux positions (y) de l'émetteur-récepteur radar (6),
l'unité de commande (10) étant conçue pour déterminer un indice de réfraction (n) du matériau de l'objet de mesure (4) à partir de
- au moins une mesure par défaut par détermination d'un temps de parcours par défaut (tP0),
- un rayon externe de l'objet de mesure (4), et
- au moins une mesure de transmission de zone de paroi dans une position de mesure verticale (S1) de l'émetteur-récepteur radar (6), où dans le signal de mesure (Si),
- il n'y a qu'un seul pic de réflexion totale,
- sans pic de réflexion partielle (Pt1, Pt2, Pt3, Pt4) de la surface externe (4a) et de la surface interne (4b) de l'objet de mesure tubulaire (4), en déterminant un retard du temps de parcours (Δt) dans la position de mesure verticale (S1) par rapport à la mesure par défaut.

12. Dispositif de mesure radar (2) selon la revendication 11, **caractérisé en ce que** la direction de déplacement (y) est linéaire et perpendiculaire à l'axe optique, et
l'unité de commande et d'évaluation (10) assigne le temps de parcours (t) du faisceau d'émission radar (Th) depuis l'émetteur-récepteur radar (6) au réflecteur (8) et retour aux positions verticales (y) de l'émetteur-récepteur radar (6).

13. Dispositif de mesure radar (2) selon la revendication 11 ou 12, **caractérisé en ce que** le dispositif de guidage (7) est conçu pour faire pivoter l'émetteur-récepteur radar (6).
